# EUROPEAN PATENT APPLICATION

(11) **EP 1 829 728 A1**
(43) Date of publication of application: **05.09.2007**
(21) Application number: 05825332.9
(22) Date of filing: 02.12.2005
(51) Int. Cl.: B60K 28/06, G08B 21/06, B62D 1/06

(54) **DEVICE FOR PREVENTING ACCIDENTS IN THE EVENT OF DROWSINESS OR INATTENTION ON THE PART OF THE DRIVER OF A VEHICLE**

(30) Priority: 16.12.2004 ES 200402832 U; 16.05.2005 ES 200501114 U
(71) Applicant: Martin Alvarez, Juan Carlos, 26005 Logrono (ES); Martin Alvarez, José Antonio, 26140 Lardero (ES); Martin Alvarez, Angel Ricardo, 26140 Lardero (ES)
(72) Inventor: MARTIN ALVAREZ, Angel Ricardo, 26140 Lardero (ES)
(74) Representative: Pons Arino, Angel
(86) International application number: PCT/ES2005/070168
(87) International publication number: WO 2006/064073

(57) **Abstract**

The invention relates to a device for preventing accidents in the event of drowsiness overcoming the driver of a vehicle. The inventive device comprises a series of sensors which are disposed on the vehicle steering wheel in order to detect the driver's grip on the wheel and the driver's pulse. The aforementioned sensors are connected to a control unit which is equipped with the necessary programming and/or circuitry to activate an audible indicator in the event of the steering wheel being released by both hands and/or a fall in the driver's pulse to below the threshold of consciousness. The device employs a shutdown switch.

## Description

### OBJECT OF THE INVENTION

The present invention refers to a device to prevent accidents in case of drowsiness or distraction of the driver of a vehicle.

### BACKGROUND OF THE INVENTION

It is well known that many accidents are caused by the drowsiness or its corresponding distraction of the driver of a vehicle, without being able to recommend anything better than the drivers stopping if they notice they might fall asleep.

The problem is that the driver thinks they can control their drowsiness but realize too late that this is not the case, after the accident has already happened or is inevitable.

The invented device overcomes these inconveniences.

### DESCRIPTION OF THE INVENTION

The invented device has been designed in an optimum way to detect the drowsiness or distraction of the driver, warn him, and, optionally, cause the vehicle to stop too.

In accordance with the invention, the device comprises a series of sensors fitted to the steering wheel of the vehicle, capable of detecting if the driver is holding the steering wheel with at least one hand, as well as detecting their pulse, so that if the driver falls asleep and their pulse drops or they release the steering wheel, both circumstances are detected by the sensors.

The sensors are connected to an integrated circuitry control unit and/or the necessary programming to trigger an acoustic warning if detecting that the driver has fallen asleep. This warning may be integrated into the control unit itself, or may be fitted near the driver's head by way of a suitable connection. A switch to this end turns off the device.

In addition, the invented device also includes a connection to the circuitry and necessary programming to interconnect with the electrical/electronic system of the vehicle, fundamentally to signals providing information about speed, in order to prevent the device from triggering when the vehicle stops and the driver is able to take their hands off the steering wheel, at a traffic light, for example, without causing the device to trigger.

Optionally, due to this connection to the electrical/electronic system of the vehicle and if it is suitably fitted out to this end, the control unit may cause the vehicle to reduce speed or stop, not only in the case of detecting driver drowsiness, but also if a specific speed set as maximum is exceeded. In this case, the device includes selector switches to select the operating mode, acoustic warning only, reduction in speed only or both, and whether it is required to function only in case of drowsiness or when exceeding a maximum speed too.

A variation of the invented device consists of fitting additional means intended to warn the driver about their condition, as well as the rest of the occupants of the vehicle and drivers of other vehicles who would be able to take precautions.

According to this variation of the invention, the device at least comprises a thread-like charged pressure sensor or cell, that is to say, in the shape of a cord, with the necessary diameter, size and length to be distributed around the whole surface of the steering wheel normally held by the hands or rested upon, including areas of the steering wheel that will make contact with the sensor even when only gently held or rested upon.

Therefore, the sensor does not detect simple contact or pulse, but the overall pressure of this contact, indicating the wakefulness of the driver (through the relaxation caused by drowsiness).

The sensor shall be directly connected by wiring or wirelessly to a control unit, and its signal set to determine the sleep threshold. The control unit, besides triggering an acoustic warning, and, if the vehicle is fitted out to this end, reducing the speed of the vehicle as specified in service model 200402832, shall switch on a luminous warning light intended to give extra warning to the driver or other passengers in the vehicle, and also cause the vehicle's turning lights to switch on as in an emergency condition to warn other drivers.

In turn, the sensor may be directly fixed to the steering wheel, which, to a larger or smaller degree, requires the intervention of the vehicle or steering wheel manufacturer, or by means of an adjustable casing, which will simplify its fitting to any vehicle.

### BRIEF DESCRIPTION OF THE DRAWINGS

Figures 1, 2 and 3 show each variation in the embodiment of the invented device.
Figures 4 and 5 each show, as a variation of the invention, possible arrangements on the steering wheel of the invented device's sensor.
Figures 6 and 7 show sections of figures 4 and 5 for two possible ways to fix the sensor to the steering wheel.

### DESCRIPTION OF A PRACTICAL EMBODIMENT OF THE INVENTION

The invented device 1 comprises an array of sensors 2 on the steering wheel 3 of the vehicle intended to detect the presence of the hands (at least, one) as well as the pulse of the driver.

The signal from the sensors is connected to a control unit 4 which is fitted out/programmed to activate an acoustic warning 5 where lack of contact of both hands on the steering wheel is detected or when the pulse of the user drops, indicating that they are asleep or reaching a level of relaxation close to drowsiness. In both cases, it these circumstances could lead to an accident, and shall lead to the triggering of the device.

In addition, the control unit is fitted with the circuitry 6 and/or corresponding programming and a connection 7 to the electrical/electronic system 8 of the vehicle by means of which its speed is displayed, in order to prevent the device from triggering when the vehicle stops. Likewise, if the vehicle's electrical/electronic installations allow it, an additional connection 9 may be fitted so that the control unit, simultaneously or regardless of the operating of the acoustic warning, triggers a drop in speed and causes the vehicle to stop if driver drowsiness is detected. Since the speed is also displayed, the device may also optionally be programmed to be triggered in the case where it detects speed above a programmed maximum.

The system is fitted with a switch 10 to turn it off, as well as selector switches 11 by means of which the user may select the operating mode (triggering of the acoustic warning, stopping of the vehicle, or both simultaneously), as well as if the intention is for the device to trigger only in case of drowsiness or also in case of exceeding the maximum speed.

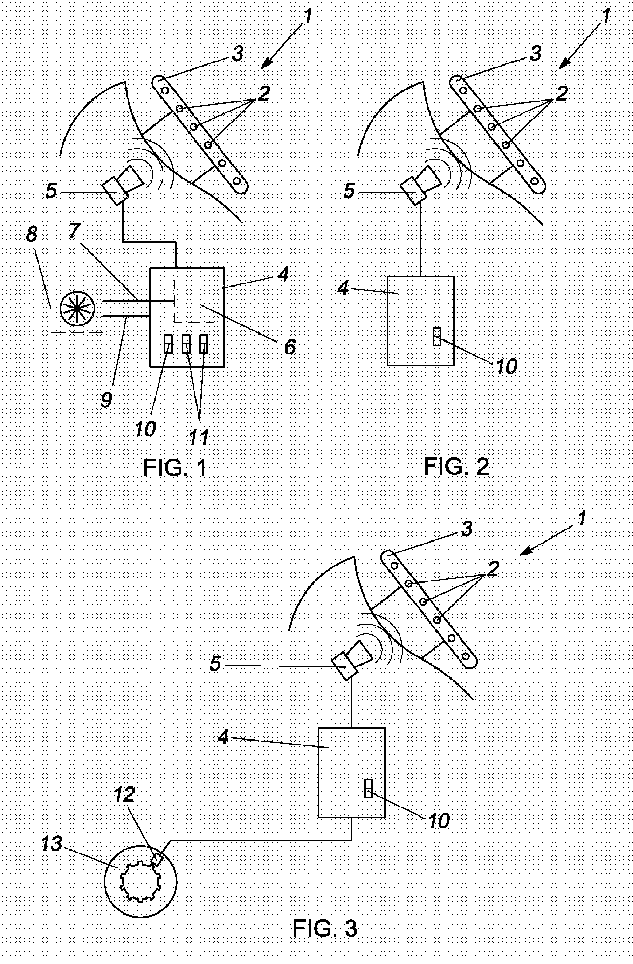

Optionally, as seen in figure 2, the invention comprises a variation for vehicles not fitted out to display speed because of the electrical/electronic installations themselves. In this case, the control unit may be set to ignore registering the speed of the vehicle which would cause the acoustic warning to trigger, on removing the hands from the steering wheel or detecting a drop in the driver's pulse, even if the vehicle were stopped at a traffic light.

Also, as seen in figure 3, the device comprises a preferred variation for vehicles not fitted out to display their speed because of the electrical/electronic installations themselves, consisting of adding a sensor itself 12 to the device to show the speed in, at least, one of the vehicle's wheels, regardless of its electronic systems.

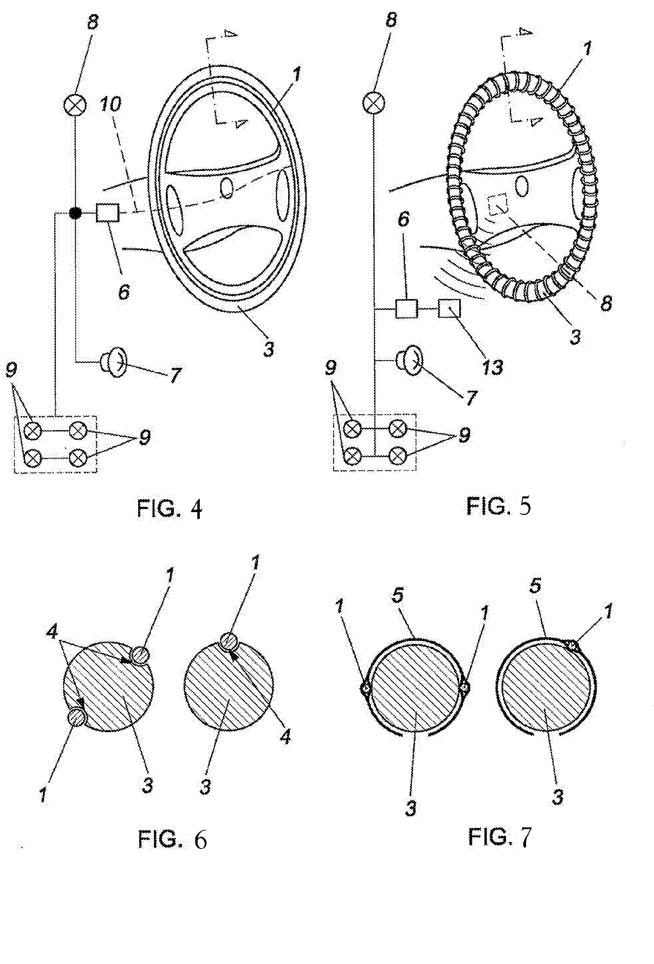

With regard to figures 4 to 7, the invented device comprises a thread-like, pressure sensor 14 fitted continuously around the whole possible surface of the steering wheel, especially its peripheral rim, able to be given different layouts, for example, figure 4 shows a layout in the shape of two circumferences that are fitted in positions noticeably at the front and back with regard to the rim, and figure 5 shows a spiral layout that completely surrounds the rim 15.

In any case, the given layout shall be such that any sufficient pressure made on the steering wheel to handle the vehicle makes contact with the sensor.
The sensor or cord may be fastened to the steering wheel in different ways. As non-restrictive examples of the invention, in the first place we propose their fitting and fastening in holes 16 made in the steering wheel as shown in the sections of figure 6, part of it remaining touchable by hand, and secondly the insertion of the sensor in a positionable case 17 on the steering wheel, as seen in the sections of the figure. This second type enables the invented means to be easily fitted in any vehicle without the need to change the steering wheel.

The signal from the sensor is conducted to a control unit 18 that triggers an acoustic warning 19, another luminous warning 20 for the driver, in addition to also switching on the emergency condition turning lights to warn other drivers. Besides, if the vehicle is fitted out to this end, on switching on, it may trigger speed reduction.

In turn, the signal may be directly transmitted to the corresponding device, by means of wires 22 that go through, for example, the steering column, or wirelessly by incorporating a small emitter 23 with its own power supply or supplied by the vehicle itself, and a receiver 24 included in the console itself, for example.

Having sufficiently described the nature of the invention, as well as the way to embody it in practice, it must be emphasized that the previously indicated layouts, represented in the attached drawings, may be modified in detail as long as they do not alter the fundamental principle.

## Claims

1. Device to prevent accidents in case of drowsiness of the driver of a vehicle; **characterized by** comprising a series of sensors fitted to the steering wheel of the vehicle that detect it is being held, as well as the pulse of the driver; the aforementioned sensors being connected to a control unit fitted with the necessary circuitry and/or programming to trigger an acoustic warning in case of both hands releasing the steering wheel and/or the driver's pulse dropping below the sleep threshold; the device includes a switch to turn it off.

2. Device according to claim 1, **characterized by** the control unit optionally being fitted with a connection to display a signal among the electronic signals of the vehicle to display its speed, in order to turn the device off when the vehicle stops.

3. Device according to claim 2, **characterized by** being fitted with a sensor itself to register vehicle speed, fitted to at least one of the wheels in order to turn the device off when the vehicle stops.

4. Device according to claim 1, **characterized by** the control unit optionally being fitted with the necessary programming and circuitry connected to the electronic/electrical system of the vehicle to cause it to reduce speed or stop when the steering wheel is released and/or the pulse drops, or a speed set as maximum is exceeded, the device also having a selector switch to select the warning only signal, drop in speed or both, in addition to another selector switch to trigger the device only in case of driver drowsiness or also when exceeding maximum speed.

5. Device according to claims 1 and 4, **characterized by** the on/off switch and operating mode selector switch being embodied in a single switch/switching device.

6. Device according to any of the previous claims, **characterized by** the sensors being made up of one or more pressure sensors arranged in the shape of cord, and long enough to cover, at least, the surface of the steering wheel normally held, including those areas that by even only gently resting or holding the steering wheel make contact with the sensor to detect a drop in the grip strength exerted on the steering wheel, indicating drowsiness or distraction of the driver; the sensor has a wired or wireless connection to the control unit, that, apart from triggering the acoustic warning adviser and decrease in speed of the vehicle, causes the emergency condition turning lights of the vehicle to switch on so as to warn other drivers, and/or the illuminating of visual warning lights inside the vehicle to complement the acoustic warning.

7. Device according to claim 6, **characterized by** the cord being inserted and fixed in one or more holes made in the steering wheel, part of it remaining touchable by hand.

8. Device according to claim 6, **characterized by** the cord being installed inside a positionable case on the steering wheel.

9. Device according to claim 6, **characterized by** the cord taking the shape of two circumferences that are noticeably positioned at the front and back of the rim of the steering wheel.

10. Device according to claim 6, **characterized by** the cord having a spiral shape that continuously surrounds the steering wheel.
